# EUROPEAN PATENT SPECIFICATION

(11) **EP 2 900 984 B1**
(45) Date of publication and mention of the grant of the patent: **01.02.2017**
(21) Application number: 13866122.8
(22) Date of filing: 25.09.2013
(51) Int. Cl.: F02C 9/22, F01D 17/16, F02K 1/30

(54) **GAS TURBINE ENGINE ASYMMETRIC NOZZLE GUIDE VANES**
LEITSCHAUFELN MIT ASYMMETRISCHEN DÜSEN FÜR EINEN GASTURBINENMOTOR
PALES DE GUIDAGE DE BUSE ASYMÉTRIQUE DE MOTEUR À TURBINE À GAZ

(30) Priority: 25.09.2012 US 201213626511
(43) Date of publication of application: 05.08.2015
(73) Proprietor: United Technologies Corporation, Farmington, CT 06032 (US)
(72) Inventor: Gregg, Shawn J., Wethersfield, Connecticut 06109 (US); Otero, Edwin, Southington, Connecticut 06489 (US)
(74) Representative: Gittins, Alex Michael
(86) International application number: PCT/US2013/061704
(87) International publication number: WO 2014/099077

(56) References cited:
- CN-A- 102 052 158
- CN-A- 102 192 504
- CN-A- 102 607 063
- US-A1- 2007 227 119
- US-A1- 2009 266 080
- US-A1- 2011 061 389

## Description

Applicant hereby claims priority to U.S. Patent Application No. 13/626,511 filed September 25, 2012.

### BACKGROUND

The present disclosure relates to a gas turbine engine and, more particularly, to a combustor and nozzle guide vane arrangement.

Gas turbine engines, such as those that power modern commercial and military aircraft, generally include a compressor to pressurize an airflow, a combustor for burning a hydrocarbon fuel in the presence of the pressurized air, and a turbine for extracting energy from the resultant combustion gases. The combustor generally includes radially spaced inner and outer liners that define an annular combustion chamber therebetween. Arrays of circumferentially distributed combustion air holes penetrate multiple axial locations along each liner to radially admit the pressurized air into the combustion chamber. A plurality of circumferentially distributed fuel nozzles project symmetrically into a forward section of the combustion chamber through a respective fuel nozzle guide to supply the fuel to be mixed with the pressurized air.

The desire for increased aerodynamic and thermodynamic efficiency drives turbine blade designs that may have high vibratory responses to multiple engine order crossings. When the turbine blade cannot be designed out of these vibratory responses, the driving frequency and forces must be changed.

A gas turbine engine according to the preamble of claim 1 is known from US2009266080.

### SUMMARY

A gas turbine engine according to one disclosed non-limiting embodiment of the present disclosure is defined according to claim 1. Further developments of the invention can be taken from the dependent claims.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is a partial sectional view of an exemplary annular combustor that may be used with the gas turbine engine shown in Figure 1;
Figure 3 is a sectional view along line A-A in Figure 2 to show a RELATED ART Nozzle Guide Vane (NGV) nozzle;
Figure 4 is a sectional view along line B-B in Figure 2 to show a RELATED ART fuel nozzle configuration;
Figure 5 is a schematic view from aft looking forward illustrating the relationship of the NGV nozzle of Figure 3 with respect to the fuel nozzle configuration of Figure 4;
Figure 6 is a sectional view along line B-B in Figure 2 to show a fuel nozzle configuration according to one non-limiting embodiment; and
Figure 7 is a schematic view from aft looking forward illustrating the relationship of the NGV nozzle of Figure 3 with respect to the fuel nozzle configuration of Figure 6.

### DETAILED DESCRIPTION

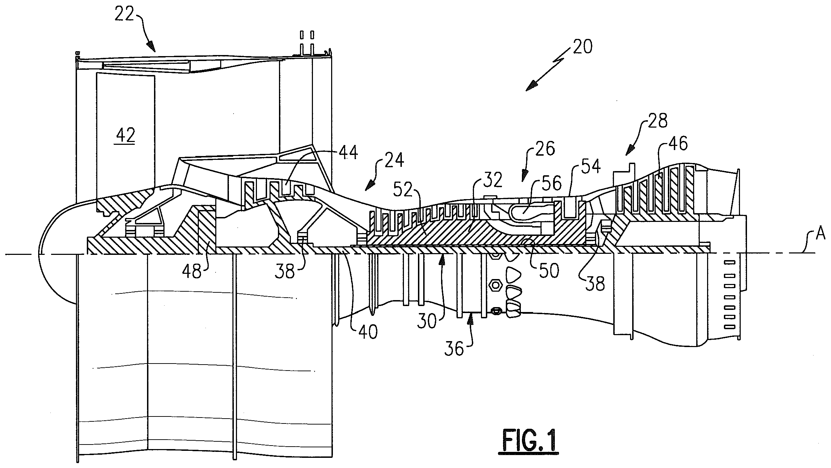

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines such as a three-spool (plus fan) engine wherein an intermediate spool includes an intermediate pressure compressor (IPC) between the LPC and HPC and an intermediate pressure turbine (IPT) between the HPT and LPT, and industrial turbine engine applications.

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor 52 ("HPC") and high pressure turbine 54 ("HPT"). A combustor 56 is arranged between the high pressure compressor 52 and the high pressure turbine 54. The inner shaft 40 and the outer shaft 50 are concentric and rotate about the engine central longitudinal axis A that is collinear with their longitudinal axes.

Core airflow is compressed by the low pressure compressor 44 then the high pressure compressor 52, mixed with the fuel and burned in the combustor 56, then expanded over the high pressure turbine 54 and low pressure turbine 46. The turbines 54, 46 rotationally drive the respective low spool 30 and high spool 32 in response to the expansion.

The main engine shafts 40, 50 are supported at a plurality of points by bearing structures 38 within the static structure 36. It should be understood that various bearing structures 38 at various locations may alternatively or additionally be provided.

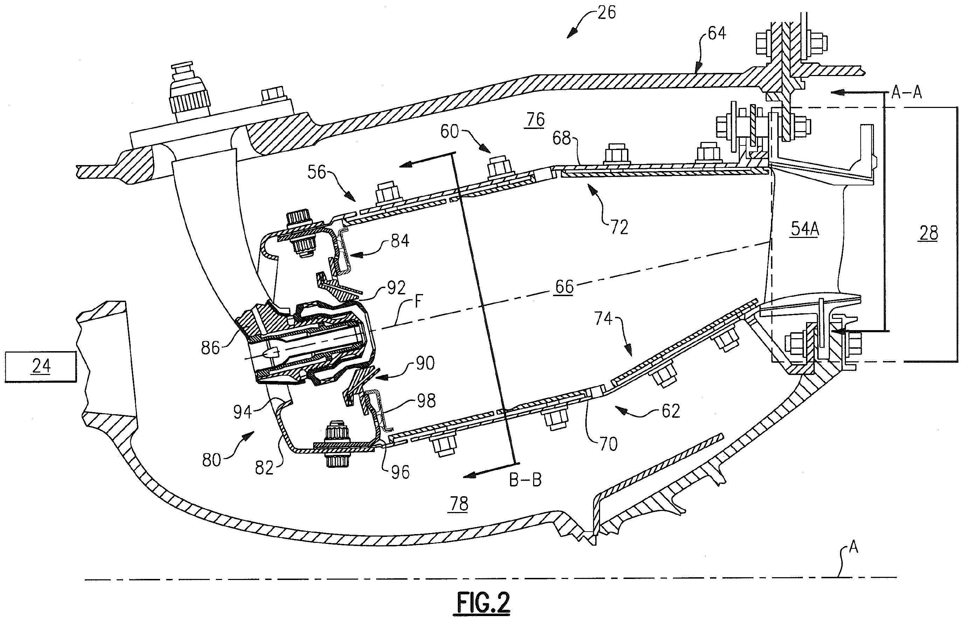

With reference to Figure 2, the combustor 56 generally includes a combustor outer liner 60 and a combustor inner liner 62. The outer liner 60 and the inner liner 62 are spaced inward from a case 64 such that an annular combustion chamber 66 is defined there between. It should be understood that although a particular combustor is illustrated, other combustor types with various liner panel arrangements will also benefit herefrom.

The outer liner 60 and the case 64 define an annular outer plenum 76 and the inner liner 62 and the case 64 define an annular inner plenum 78. The outer and inner liners 60, 62 contain the flame for direction toward the turbine section 28. Each liner 60, 62 generally includes a respective support shell 68, 70 that supports one or more respective liner panels 72, 74 mounted to a hot side of the respective support shell 68, 70. The liner panels 72, 74 define a liner panel array that may be generally annular in shape. Each of the liner panels 72, 74 may be generally rectilinear and manufactured of, for example, a nickel based super alloy or ceramic material.

The combustor 56 further includes a forward assembly 80 immediately downstream of the compressor section 24 to receive compressed airflow therefrom. The forward assembly 80 generally includes an annular hood 82, a bulkhead assembly 84, a multiple of fuel nozzles 86 (one shown) and a multiple of fuel nozzle guides 90 (one shown) that defines a central opening 92. The annular hood 82 extends radially between, and is secured to, the forwardmost ends of the liners 60, 62. The annular hood 82 includes a multiple of circumferentially distributed hood ports 94 that accommodate the respective fuel nozzle 86 and introduce air into the forward end of the combustion chamber 66. Each fuel nozzle 86 may be secured to the outer case 64 and projects through one of the hood ports 94 and through the central opening 92 within the respective fuel nozzle guide 90 along a fuel nozzle axis F.

A multiple of Nozzle Guide Vanes (NGVs) 54A of the high pressure turbine 54 are located immediately downstream of the combustor 56. The NGVs 54A are static engine components which direct core airflow from the upstream combustor 56. The NGVs 54A direct core airflow combustion gases onto the turbine blades to facilitate the conversion of pressure energy into kinetic energy. The core airflow combustion gases from the combustor 56 are also accelerated by the NGVs 54A because of their convergent shape and are typically given a "spin" or a "swirl" in the direction of turbine rotor rotation. The turbine rotor blades absorb this energy to facilitate rotation of the turbine rotor at high speed. The NGVs 54A in one disclosed non-limiting embodiment are the first static vane structure in the turbine section 28 of the gas turbine engine 20 upstream of a first turbine rotor. The desire for increased aerodynamic and thermodynamic efficiency drives turbine blade designs that may have a high vibratory response to multiple engine order crossings. When the turbine blade cannot be designed out of these responses, the driving frequency and forces must be changed.A method of achieving this is by utilizing an asymmetric stator vane configuration in front of that turbine blade row. The asymmetric stator vane configuration reduces the blade forcing by not allowing the dynamic forcing functions to achieve a steady state condition. In one revolution the blade will be subject to a multiple of forces and frequencies that does not achieve the max amplitude of steady state condition that is present in a symmetric NGV.

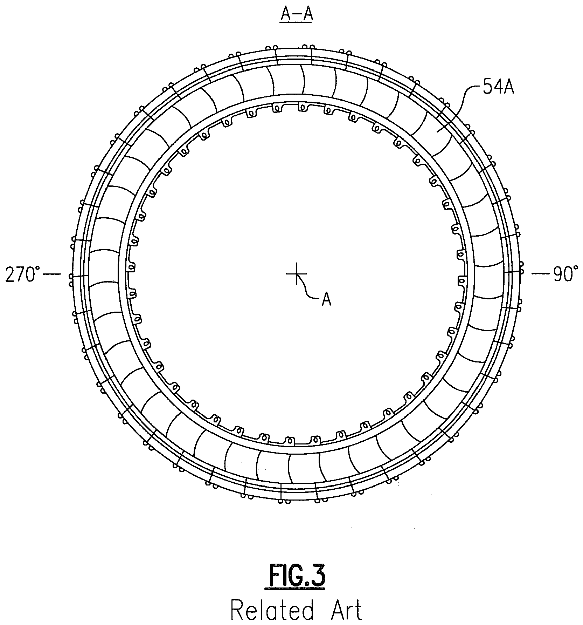

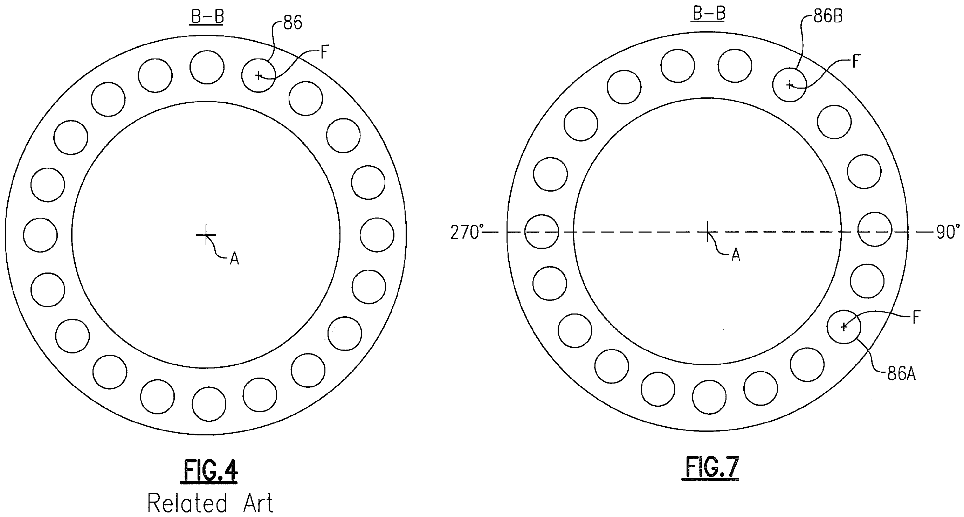

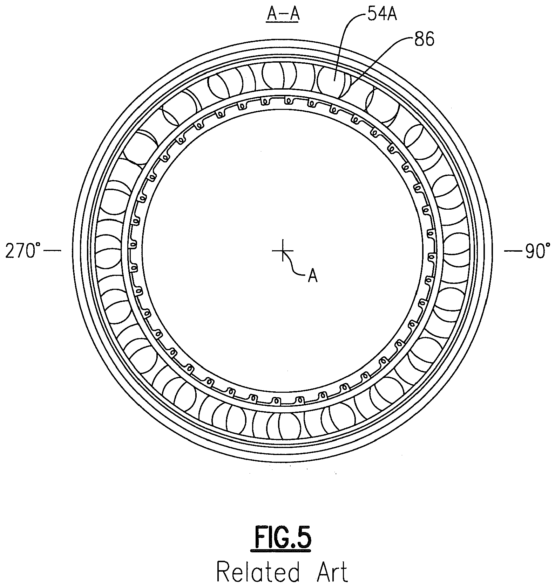

With reference to Figure 3 (RELATED ART) the NGVs 54A are arranged asymmetrically about the engine central longitudinal axis A such that a first number of NGVs 54A are arranged between the 90 degree line and the 270 degree line (twenty shown) while a second number of NGVs 54A different than the first number are arranged between the 270 degree line and the 90 degree line (eighteen shown) around the engine central longitudinal axis A. In contrast, the multiple of fuel nozzles 86 (Figure 4; RELATED ART) are symmetrically arranged about the combustor 56 (twenty shown). The position of each of the multiple of fuel nozzles 86 between the 90 degree line and the 270 degree line defines a 1:2 relationship relative to the associated multiple of NGVs 54A but the multiple of fuel nozzles 86 between the 270 degree line and the 90 degree line varies relative to the associated NGVs 54A around the combustor 56 such that consistent alignment is not possible over this 180 degree arc (Figure 5; RELATED ART). While this changes the driving frequency, the asymmetric NGVs are no longer aligned with the combustor fuel nozzle. This limits their ability to diffuse the regions of hotter gas temperature which may lead to increased gas temperature and the exacerbation of downstream hot spots. This increased gas temperature variability requires downstream gaspath components be allocated additional cooling air which may have a negative impact on engine thermal efficiency.

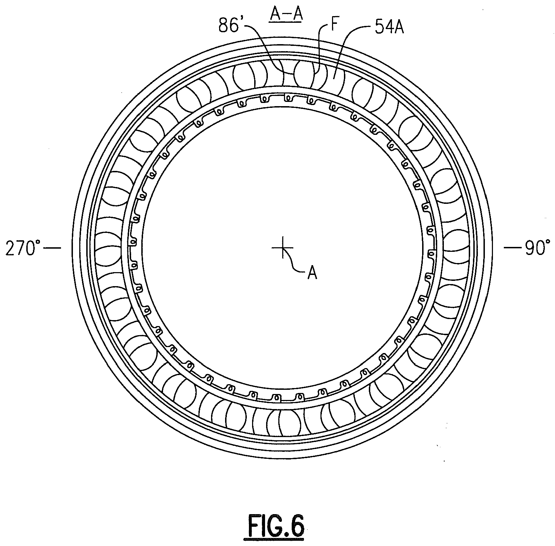

With reference to Figure 6, the NGVs 54A are also arranged asymmetrically about the engine central longitudinal axis A. In this disclosed non-limiting embodiment, a first number of NGVs 54A are arranged between the 90 degree line and the 270 degree line (twenty shown) while a second number of NGVs 54A different than the first number are arranged between the 270 degree line and the 90 degree line (eighteen shown) around the engine central longitudinal axis A. That is, 18 NGVs are arranged over 180 degrees, while 20 NGVs are arranged over the other 180 degrees to correspond with the NGVs 54A over the entire 360 degree circumference of the combustor 56. It should be appreciated that any 180-degree arc may define the line of asymmetry. It should be appreciated that other arcs such as 90-degree arcs may alternatively be provided.

With reference to Figure 7, a first multiple of fuel nozzles 86A equivalent to the first number of NGVs 54A are arranged between the 90 degree line and the 270 degree line (twenty shown) while a second multiple of fuel nozzles 86B equivalent to the second number of NGVs 54A different than the first number are arranged between the 270 degree line and the 90 degree line (eighteen shown) around the engine central longitudinal axis A. The position of each of the multiple of fuel nozzles 86A, 86B around the entire circumference (360°) of the combustor 56 defines a 1:2 relationship with the NGVs 54A. The 1:2 relationship facilitates optimal rotational alignment between the multiple of fuel nozzles 86A, 86B with respect to the NGVs 54A typically referred to as "clocking" to minimize or avoid downstream hot spots. In other words, the multiple of fuel nozzles 86A, 86B are arranged asymmetrically, consistent with the asymmetric NGVs 54A around the full circumference of the combustor 56for efficient flow of the core airflow combustion gases.

The presence of discrete fuel nozzles creates discrete combustion patterns developing within the combustor. This results in radial and circumferential variation that must be accounted for in the thermal designs of the downstream turbine hardware. Static hardware such as NGVs and downstream stator-airfoils are most susceptible to this variation since they are fixed. Contrast this with rotating airfoil stages which pass through all the radial and circumferential variation, thereby being exposed to the average of said variation.

By altering the fuel nozzle count to be an integral divisor of the NGVs, it is possible to maintain a repeatable positional alignment about the full circumference of the combustor-NGV assembly. When properly aligned, the NGVs diffuse some of the radial and circumferential variation created by the combustor. This diffusion reduces downstream gas temperature variation, thereby reducing the maximum gas temperatures to which downstream static gaspath hardware are exposed.

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

## Claims

1. A gas turbine engine (20) comprising:
a combustor, a multiple of fuel nozzles (86) and a multiple of Nozzle Guide Vanes (NGVs) (54A), **characterized in that** the multiple of fuel nozzles (86) are arranged asymmetrically about a central longitudinal axis (A) of the engine (20); and
**in that** the multiple of Nozzle Guide Vanes (NGVs) (54A) are arranged asymmetrically about the central longitudinal axis (A), wherein the multiple of fuel nozzles 86 are arranged asymmetrically, consistent with the asymmetric NGVs 54A around the full circumference of the combustor 56, said multiple of NGVs (54A) clocked with respect
to said multiple of fuel nozzles (86) around a 360 degree circumference.

2. The gas turbine engine as recited in claim 1, wherein the position of said multiple of fuel nozzles
(86) define a 1:2 relationship with respect to said multiple of NGVs (54A).

3. The gas turbine engine as recited in claim 1, wherein said multiple of fuel
nozzles (86) define a first multiple (86A) over a 180 degree arc and a second multiple (86B) over a second 180 degree arc, said first multiple (86A) different than said second multiple (86B).

4. The gas turbine engine as recited in claim 3, wherein said multiple of NGVs (54A) define a first multiple of NGVs over a 180 degree arc and a second multiple of NGVs over a second 180 degree arc, said first multiple different than said second multiple, said first multiple of fuel nozzles (86A) equivalent to said first multiple of NGVs, said second multiple of fuel nozzles (86B) equivalent to said second multiple of NGVs.

5. The gas turbine engine as recited in claim 1, wherein said multiple of NGVs (54A) define a first multiple over a 180 degree arc and a second multiple over a second 180 degree arc, said first multiple different than said second multiple.

## Patentansprüche

1. Gasturbinenmotor (20), umfassend:
eine Brennkammer, ein Vielfaches von Brennstoffdüsen (86) und ein Vielfaches von Düsenleitschaufeln (NGVs) (54A), **dadurch gekennzeichnet, dass** das Vielfache von Brennstoffdüsen (86) asymmetrisch um eine zentrale Längsachse (A) des Motors (20) angeordnet ist; und dadurch, dass das Vielfache von Düsenleitschaufeln (NGVs) (54A) asymmetrisch um die zentrale Längsachse (A) angeordnet ist, wobei das Vielfache von Brennstoffdüsen (86) asymmetrisch entsprechend den asymmetrischen NGVs (54A) um den gesamten Umfang der Brennkammer (56) angeordnet ist, wobei das Vielfache von NGVs (54A) bezogen auf das Vielfache von Brennstoffdüsen (86) um einen 360-Grad-Umfang getaktet ist.

2. Gasturbinenmotor nach Anspruch 1, wobei die Position des Vielfachen von Brennstoffdüsen (86) ein 1:2-Verhältnis bezogen auf das Vielfache von NGVs (54A) definiert.

3. Gasturbinenmotor nach Anspruch 1, wobei das Vielfache von Brennstoffdüsen (86) ein erstes Vielfaches (86A) in einem 180-Grad-Bogen und ein zweites Vielfaches (86B) in einem zweiten 180-Grad-Bogen definiert, wobei sich das erste Vielfache (86A) von dem zweiten Vielfachen (86B) unterscheidet.

4. Gasturbinenmotor nach Anspruch 3, wobei das Vielfache von NGVs (54A) ein erstes Vielfaches von NGVs in einem 180-Grad-Bogen und ein zweites Vielfaches von NGVs in einem zweiten 180-Grad-Bogen definiert, wobei sich das erste Vielfache von dem zweiten Vielfachen unterscheidet, wobei das erste Vielfache von Brennstoffdüsen (86A) dem ersten Vielfachen von NGVs entspricht und das zweite Vielfache von Brennstoffdüsen (86B) dem zweiten Vielfachen von NGVs entspricht.

5. Gasturbinenmotor nach Anspruch 1, wobei das Vielfache von NGVs (54A) ein erstes Vielfaches in einem 180-Grad-Bogen und ein zweites Vielfaches in einem zweiten 180-Grad-Bogen definiert, wobei sich das erste Vielfache von dem zweiten Vielfachen unterscheidet.

## Revendications

1. Moteur à turbine à gaz (20) comprenant :
un brûleur, un multiple de buses de carburant (86) et un multiple d'aubes directrices de buse (NGV) (54A), **caractérisé en ce que** le multiple de buses de carburant (86) est agencé de manière asymétrique autour d'un axe longitudinal central (A) du moteur (20) ; et
**en ce que** le multiple d'aubes directrices de buse (NGV) (54A) est agencé de manière asymétrique autour de l'axe longitudinal central (A), dans lequel le multiple de buses de carburant (86) est agencé de manière asymétrique, conformément aux NGV asymétriques (54A) sur la circonférence entière du brûleur (56), ledit multiple de NGV (54A) étant synchronisé par rapport audit multiple de buses de carburant (86) sur une circonférence de 360 degrés.

2. Moteur à turbine à gaz selon la revendication 1, dans lequel la position dudit multiple de buses de carburant (86) définit un rapport de 1:2 par rapport audit multiple de NGV (54A).

3. Moteur à turbine à gaz selon la revendication 1, dans lequel ledit multiple de buses de carburant (86) définit un premier multiple (86A) sur un arc de 180 degrés et un second multiple (86B) sur un second arc de 180 degrés, ledit premier multiple (86A) étant différent dudit second multiple (86B).

4. Moteur à turbine à gaz selon la revendication 3, dans lequel ledit multiple de NGV (54A) définit un premier multiple de NGV sur un arc de 180 degrés et un second multiple de NGV sur un second arc de 180 degrés, ledit premier multiple étant différent dudit second multiple, ledit premier multiple de buses de carburant (86A) étant équivalent audit premier multiple de NGV, ledit second multiple de buses de carburant (86B) étant équivalent audit second multiple de NGV.

5. Moteur à turbine à gaz selon la revendication 1, dans lequel ledit multiple de NGV (54A) définit un premier multiple sur un arc de 180 degrés et un second multiple sur un second arc de 180 degrés, ledit premier multiple étant différent dudit second multiple.
